# EUROPEAN PATENT APPLICATION

(11) **EP 3 249 669 A1**
(43) Date of publication of application: **29.11.2017**
(21) Application number: 16171357.3
(22) Date of filing: 25.05.2016
(51) Int. Cl.: H01G 11/86, H01G 11/24, H01G 11/34, H01G 11/42, H01G 11/44, H01G 11/32, C01B 32/00

(54) **SUPERCAPACITOR AND NITROGEN-DOPED POROUS CARBON MATERIAL**

(71) Applicant: Universiteit van Amsterdam, 1012 WX Amsterdam (NL)
(72) Inventor: EISENBERG, David, 1081 EJ Amsterdam (NL); ROTHENBERG, Gad, 2341 NV Oegstgeest (NL)
(74) Representative: De Vries & Metman

(57) **Abstract**

The invention pertains to the use of a nitrogen-doped porous carbon material in a supercapacitor, wherein the nitrogen-doped porous carbon material has the following properties:
- a nitrogen content in the range of 0.50 to 8.0 at% as determined via XPS
- a specific surface area (N2 , BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

The invention further pertains to a supercapacitor, an electrode for use in a supercapacitor, to specific nitrogen-doped porous carbon materials and to methods for the manufacture thereof.

## Description

### Field of the invention

The present invention pertains to the use in supercapacitors of a nitrogen-doped porous carbon material. The invention also pertains to a supercapacitor comprising a specific nitrogen-doped porous carbon material, to an electrode for use in a supercapacitor, to specific nitrogen-doped porous carbon materials and to methods for the manufacture thereof.

### Background of the invention

A capacitor is a passive two-terminal electrical component which is used to store electrical energy in a temporary field. Supercapacitors are electrochemical capacitors which comprise two electrodes which are separated by an ion permeable membrane, also called a separator, and connected via a liquid electrolyte. In supercapacitors the energy storage is achieved by two main storage principles, namely double layer capacitance and pseudocapacitance. Double layer capacitance is the electrostatic storage of the electrical energy achieved by separation of electrical charge into a double electric layer at the interface between a conductor electrode and an electrolyte solution. Pseudocapacitance is the electrochemical storage of the electrical energy, achieved by redox reactions, electrosorption, or intercalation on the surface of the electrode that results in reversible (faradaic) charge-transfer between the electrode and the electrolyte.

US2012/0241691 describes the use as electrode material in supercapacitors of a nitrogen-containing porous carbon material which is obtained by mixing melamine (1,3,5-triazine-2,4,6-triamine) with magnesium citrate, and heating the resultant mixture to 700°C or more in an inert atmosphere, followed by cooling and washing with acid to remove magnesium oxide.
US2013/0335883 describes a porous carbon material the use as electrode material in supercapacitors which is obtained by heating magnesium citrate to 500°C or more in an inert atmosphere, followed by washing with acid.
US 7532454 describes an electrode for a supercapacitor which is a mixture of carbon nanotubes and activated carbon. It is indicated that the activated carbon can be derived from natural sources such as pine, coconut, etc.

There is need in the art for materials which, when used in supercapacitors, show good capacitance properties in combination with good charge-discharge rates. Further, there is need for materials that can be prepared reproducibly from inexpensive organic-inorganic precursors.

### Summary of the invention

It has been found that a specific nitrogen doped porous carbon material is particularly attractive for use in supercapacitors.

The present invention thus pertains to the use of a nitrogen-doped porous carbon material in a supercapacitor, wherein the nitrogen-doped porous carbon material has the following properties:
- a nitrogen content in the range of 0.50 to 8.0 at% as determined via XPS
- a specific surface area (N2 adsorption, BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

It has been found that the process of the present invention results in materials which, when used in supercapacitors, show good capacitance properties in combination with good charge-discharge rates. Further, the process of the present invention makes use of inexpensive organic-inorganic precursors, and allows reproducible manufacture. One attractive feature of the method according to the invention is that it makes use of a single precursor, rather than a mixture of precursors. This is believed to ensure a better homogeneity of the material.

The invention also pertains to a supercapacitor comprising at least two electrodes separated by a separator, and connected via a liquid electrolyte, wherein at least one of the electrodes comprises a nitrogen-doped porous carbon material as described above.

The invention further pertains to an electrode for use in a supercapacitor which comprises a nitrogen-doped porous carbon material as described above.

The invention further pertains to new nitrogen-doped porous carbon materials which have the following properties:
- a nitrogen content in the range of 0.50 to 5.5 at% as determined via XPS
- a specific surface area (N2 adsorption, BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.
These new materials ae particularly suitable for use in supercapacitors as mentioned above, but they also find other uses.

The invention also pertains to a method for manufacturing these new materials, which comprises the steps of:
- preparing an aqueous solution comprising N-containing organic acid as anion, alkaline earth metal cations, and alkali metal cations,
- precipitating a mixture of alkaline earth metal salt of a N-containing organic acid and alkali metal salt of a N-containing organic acid from the aqueous solution,
- subjecting the precipitate to a pyrolysis step at a temperature between 500°C and 1200°C in an inert atmosphere,
- contacting the product of the pyrolysis step with an acidic solution to leach earth alkali metal components and alkaline metal components from the product of the pyrolysis step,
- optionally subjecting the leached product to a further heating step at a temperature of at least 800°C in an inert atmosphere.

### Detailed description of the invention

The various aspects of the present invention will be elucidated further below.

As indicated above, in one embodiment, the invention pertains to the use of a nitrogen-doped porous carbon material in a supercapacitor, wherein the nitrogen-doped porous carbon material has the following properties:
- a nitrogen content in the range of 0.50 to 8.0 at% as determined via XPS
- a specific surface area (N2 adsorption, BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

It is noted that D. Eisenberg et al., A Simple Synthesis of an N-doped Carbon ORR Catalyst: Hierarchical Micro/Meso/Macro Porosity and Graphitic Shells, Chem. Eur. J. 2016, 22, 501-505, describes a nitrogen-doped porous carbon material comprising 5.7 atom% nitrogen. This document does not disclose the use of the material in supercapacitors, however.

The nitrogen content of the nitrogen-doped porous carbon material used in supercapacitors in accordance with the present invention can be determined via X-Ray Photoelectron Spectroscopy (XPS) using the following method:
Using a PHI VersaProbe II scanning XPS microprobe (Physical Instruments AG, Germany), analysis is performed using a monochromatic Al Kα X-ray source of 24.8 W power with a beam size of 100 µm. The spherical capacitor analyser is set at 45° take-off angle with respect to the sample surface. The pass energy was 46.95 eV. Integration was performed and adjusted to remove the occasionally occurring Si 2p peaks (< 3%). Peaks were calibrated using the C1s position. Curve fitting is performed using the XPSPeak 4.1 freeware, and assigned based on literature values. Reference is made to Chem. Eur. J. 2016, 22, 501-505, cited above.

The nitrogen-doped porous carbon material used in supercapacitors in accordance with the present invention has a nitrogen content in the range of 0.50 to 8.0 at%. It may be preferred for the nitrogen content to be in the range of 1.0-8.0 at.%, in particular in the range of 2.0-8.0 at.%. A range of 4.0 to 8.0 at% may be particularly preferred, as it is believed that higher nitrogen contents lead to an increased capacitance.

The nitrogen can be present in different configurations in the nitrogen-doped porous carbon material used in the present invention, such as at the edges of graphitic plains (pyridinic nitrogen, N-pyr), inside graphitic planes (graphitic nitrogen, N-graph), in more oxidized environments (N-oxy). The different types of nitrogen can be determined using XPS as described above.
Graphitic nitrogen is generally present in an amount of 35-80%, calculated on the total amount of atomic nitrogen, in particular in the range of 40-75%, more in particular in the range of 45-75%.
Oxydized nitrogen is generally present in an amount of 3-25%, calculated on the total amount of atomic nitrogen, in particular in the range of 3-20%, more in particular in the range of 5-18%.
Pyridinic nitrogen is generally present in an amount of 10-50%, calculated on the total amount of atomic nitrogen. It has been found that it is preferred for the nitrogen-doped porous carbon material used in the present invention to have at least 15% of the total amount of nitrogen present in the form of pyridinic nitrogen, as pyridinic nitrogen is believed to contribute to the capacitance of the material. It is more preferred for at least 20% of the total amount of nitrogen to be present in the form of pyridinic nitrogen, in some embodiments at least 25%.

The nitrogen-doped porous carbon material has a surface area as determined by BET from the nitrogen adsorption isotherm of at least 1000 m2/g.
In the context of the present invention the nitrogen adsorption isotherm can be measured on a Thermo Scientific Surfer instrument using N2 at 77 K. The samples are dried in a vacuum (1·10-3 mbar) for 3 h at 200°C prior to the measurement. Helium density is measured on a Micromeretics multi volume pycnometer 1305. Isotherms are analyzed by the ThermoFischer Advanced Data Processing 6.0 software. Specific surface areas and micropore volumes can calculated using the BET2 and the Dubinin-Radushkevitch methods, respectively. Micropore volume is the pore volume present in pores with a diameter below 2 nm. Total pore volume is the pore volume determined at relative pressure P/P0 = 0.99. Mesopore volume is total pore volume minus micropore volume.

A higher specific surface area is considered preferred in the present invention as this is believed to contribute to a higher capacitance. It is therefore considered preferred for the nitrogen-doped porous carbon material to have a specific surface area of at least 1100 m2/g, in particular at least 1200 m2/g. As a maximum a value of 3000 m2/g may be mentioned.

The nitrogen-doped porous carbon material used in the present invention has a total pore volume as determined by nitrogen adsorption of at least 0.80 ml/g. A larger pore volume may be preferred as this is believed to contribute to a higher capacitance. It is therefore considered preferred for the nitrogen-doped porous carbon material to have a nitrogen adsorption pore volume of at least 0.90 ml/g, in some embodiments at least 1.0 ml/g. As maximum, a value of 3.5 ml/g may be mentioned.

It is a particular feature of the nitrogen-doped porous carbon material used in the invention that it has at least 50% of the pore volume in pores with a diameter of above 2 nm (nitrogen adsorption pore size distribution). It has been found that a higher percentage of pores in this range positively influences the capacitance.
It is preferred for the nitrogen-doped porous carbon material to have at most 90% of its nitrogen adsorption pore volume in pores with a diameter of above 2 nm, in particular between 60 and 80%.
Additionally or alternatively, it is preferred for the nitrogen-doped porous carbon material to have at least 0.5 ml/g of its nitrogen adsorption pore volume in pores with a diameter of above 2 nm, in particularly at least 0.6 ml/g. Specifically preferred materials have at least 0.8 ml/g of their nitrogen adsorption pore volume in pores with a diameter of above 2 nm, in particularly at least 1.0 ml/g, or even higher.

It is noted that the materials described in US2012/0241691 do not meet this requirement. The materials described therein are prepared from a mixture comprising substantial amounts of melamine (30% to obtain a nitrogen content of 1.3%). The melamine will not contribute to the formation of mesopores.

As indicated above, the invention pertains to the use of a nitrogen-doped porous carbon material in supercapacitors, to a supercapacitor, and to an electrode for use in a supercapacitor. The preferences expressed above apply to the use of the material in a supercapacitor, to a supercapacitor comprising the material, and to an electrode comprising the material.

Supercapacitors generally comprise two electrodes which are separated by an ion permeable membrane, also indicates as separator, and connected via a liquid electrolyte. The electrodes are in contact with conductive plates used as current collectors. Supercapacitors, their composition and manufacture are known in the art. The following is provided as general information.
The conductive plates can, for example, comprise stainless steel, gold, nickel, tungsten, or carbon.
The nitrogen-doped carbon used in accordance with the present invention can be used as an electrode e.g. as follows. The carbon is mixed with a binder, generally a polymer binder, in such as PTFE or PVDF, and if necessary a solvent, to form a slurry. The solvent can be aqueous or organic, and is, for example, water or NMP. The binder can be used, for example, in an amount of 0-20 wt.%, calculated on the weight of the carbon. The solvent can be used, e.g., in an amount of 50-500 wt.%, calculated on the weight of the carbon. A layer of slurry is formed, and the layer is dried to remove the solvent and form a sheet. Electrodes of any size can then be cut from the sheet.
Other components can be added to the electrode. For example a conductive additive such as graphitic carbon can be added, for example in an amount of 0-20 wt.%.
A capacitor is made by pressing two such electrodes together, separated by an electrolyte-soaked ion-permeable membrane. The electrolyte can be an aqueous acidic, alkaline or organic solvent. The ion-permeable membrane can be based on paper, glassy fibers, or polymers.

In a further embodiment, the present invention pertains to a nitrogen-doped porous carbon material which has the following properties:
- a nitrogen content in the range of 0.50 to 5.5 at% as determined via XPS
- a specific surface area (N2 , BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

Except for the nitrogen content, this nitrogen-doped porous carbon material according to the invention has the same properties as the nitrogen-doped porous carbon material described above for use in a supercapacitor. Therefore, what has been stated above on type of nitrogen, specific surface area, nitrogen adsorption pore volume and pore size distribution, mercury intrusion pore volume, and other parameters also applies to the nitrogen-doped porous carbon material according to the invention, and the relevant paragraphs should be considered inserted here.

The nitrogen-doped porous carbon material according to the invention has a nitrogen content of 0.50-5.5 at%, which is therewith below the value described in Eisenberg et al. as mentioned above. It may be preferred for the nitrogen-doped porous carbon material according to the invention to have a nitrogen content of 1.0 to 5.0 at.%, in particular 2.0 to 5.0 at.%.

The nitrogen-doped porous carbon material according to the invention can be prepared by a method comprising the steps of:
- preparing an aqueous solution comprising N-containing organic acid as anion, alkaline earth metal cations, and alkali metal cations,
- precipitating a mixture of alkaline earth metal salt of a N-containing organic acid and alkali metal salt of a N-containing organic acid from the aqueous solution,
- subjecting the precipitate to a pyrolysis step at a temperature between 500°C and 1200°C in an inert atmosphere,
- contacting the product of the pyrolysis step with an acidic solution to leach earth alkali metal components and alkaline metal components from the product of the pyrolysis step,
- optionally subjecting the leached product to a further heating step at a temperature of at least 800°C in an inert atmosphere.

The first step in the process according to the invention is preparing an aqueous solution comprising N-containing organic acid as anion, alkaline earth metal cations, and alkali metal cations. It has been found that the use of a combination of alkaline earth metal cations and alkali metal cations makes it possible to tailor the nitrogen content of the material thus obtained.
The solution can be prepared starting out from the respective salts of N-containing organic acid. However, it is also possible to prepare the solution in various other manners. In one embodiment, the solution is prepared by combining in an aqueous medium an N-containing organic acid, an inorganic alkaline earth metal salt, and an inorganic alkali metal salt. For example, one can start out with a solution of N-containing organic acid, followed by the addition of earth alkali metal salt and alkaline metal salt, added in combination or one after the other, in solid form or in dissolved form. The salt of the earth alkali metal salt and alkaline metal salt in this embodiment is generally an inorganic salt, preferably selected from carbonates, oxides, and hydroxides.
To be able to obtain an aqueous solution it is required that the salts present therein have a solubility in water which is such that a reasonable concentration of the various components can be obtained. It is therefore preferred for the alkaline earth metal salt of the N-containing organic acid and the alkali metal salt of a N-containing organic acid to have a solubility in the solution medium of at least 0.05 mol/l, in particular at least 0.1 mol/l. It is within the scope of the skilled person to check the solubility of the materials selected.

The alkaline earth metals suitable for use in the invention include magnesium, calcium, strontium, and barium, with calcium and magnesium being preferred for reasons of costs and availability. Magnesium is considered particularly preferred as leaching of magnesium oxide particles from the carbon material after the heat treatment has been found easy to perform.

The alkali metals suitable for use in the invention include lithium, sodium, potassium, rubidium, and cesium. Sodium and potassium are preferred for reasons of costs and availability.

The molar ratio between the alkaline earth metal and the alkali metal generally is in the range of 10:1 to 0.1:1, in particular in the range of 5:1 to 1:1. In general, the use of less alkali metal (and thus a higher ratio between the alkaline earth metal and the alkali metal) leads to a higher nitrogen content in the final product, which is associated with a higher capacitance.
In general, the N-containing organic acid comprises at least one nitrogen atom and 2-20 carbon atoms. The organic acid may be a carboxylic acid, but other acids such as sulphonic acids may also be used. The use of carboxylic acids is generally considered preferred, as the use of sulphonic acids will result in the addition of sulphur to the system, which may bring up HSE issues. N-containing polycarboxylic acids may be preferred.
It may be preferred for the compound to have the nitrogen as a secondary amine position, preferably at a tertiary amine position. Additionally or alternatively, it may be preferred for the compound to have at most 8 carbon atoms connected together, in particular at most 6, in some embodiments at most 4.

Examples of suitable acids include nitrilotriacetic acid, iminodiacetic acid, and ethylenediamine tetraactetic acid.

The next step in the method according to the invention is precipitating the mixture of alkaline earth metal salt of a N-containing organic acid and alkali metal salt of a N-containing organic acid from the aqueous solution.
This can be done in various ways. One method is the addition of further compounds to the system to decrease the solubility of the salts in the aqueous medium. Suitable further compounds are in themselves miscible with water. Lower alcohols and ketones such as C1-C4 alcohols and C3-C6 ketones have been found suitable.
A further possibility would be to select the nature of the acid, the alkaline earth metal and the form in which it is added, and the alkali metal and the form in which it is added in such a manner that a precipitate is formed upon combination of the various components.
A further possibility is of course the evaporation of water, which will result in the formation of a precipitate. Combinations of the various methods can also be applied.

The precipitate is isolated from the solution in manners known in the art, e.g., by filtration, optionally followed by washing. It is generally dried before being processed further.

The precipitate is then subjected to a pyrolysis step at a temperature of between 500°C and 1200°C in an inert atmosphere. In the pyrolysis step, the organic acid is carbonized, to form a nitrogen-doped carbon structure, while the alkaline-earth and alkaline metal ions form oxide particles and/or etch pores into the structure.
The reaction is carried out in an inert atmosphere to prevent combustion and other reactions. Suitable inert atmospheres are known to the skilled person and include an argon, nitrogen, or helium atmospheres, at least 99.9% pure (no more than 0.1% O₂, and preferably even less).

The pyrolysis step is preferably carried out at a temperature between 600°C and 1100°C, more preferably at least 700°C, still more preferably between 800°C and 1000°C.
The pyrolysis reaction generally takes between 15 minutes and 12 hours, depending on the reaction temperature, with higher temperatures being associated with shorter reaction times. A reaction time of 15 minutes to 6 hours may be preferred, more preferably 30 mins to 5 hours, even more preferably 1-3 hours. The heating rates generally can be 1 to 20 °C/min, more preferably 5 to 10 °C/min.
The inert gas generally can be flowed at rates of 20 to 200 sccm, preferably at 80 to 150, for at least 30 minutes before the heat treatment, preferably for at least 90 minutes.

When the pyrolysis reaction has been completed, the reaction product is cooled to a temperature at which further processing is possible, generally between 5 and 95°C. The product is then contacted with an acidic solution to leach earth alkali metal components and alkaline metal components from the product of the pyrolysis step. The acidic solution is generally an aqueous solution of an organic or inorganic acid. Suitable organic acids include C1-C6 mono, di, or tri-carboxylic acids, and inorganic acids such as HCl, sulphuric acid, nitric acid, and phosphoric acid.
The concentration of the acidic solution is such that the pH of the solution is sufficiently low to effect adequate leaching. Suitable pH values are in the range of 0 to 5, more preferably 1 to 3.

If so desired, the product of the acid leaching step can be submitted to a further heating step at a temperature between 800°C and 1200°C in an inert atmosphere. It may be preferred for the further heating step to carried out at a temperature between 900 and 1100°C. For the atmosphere and reaction time reference is made to the description of the previous pyrolysis treatment. The aim of this step is to promote graphitization, to remove surface groups that may have been introduced by the acid (e.g. sulphonate groups due to sulphuric acid washing), and to decrease the amount of nitrogen incorporated in the material.

It is noted that various elements of the present invention, including but not limited to preferred ranges for the various parameters, can be combined unless they are mutually exclusive.

The invention will be elucidated by the following Examples, without being limited thereto or thereby.

### Example 1: synthesis of nitrogen-doped porous carbon materials

Materials were synthesized using a modified version of the method described in D. Eisenberg et al., A Simple Synthesis of an N-doped Carbon ORR Catalyst: Hierarchical Micro/Meso/Macro Porosity and Graphitic Shells, Chem. Eur. J. 2016, 22, 501-505. All chemicals were purchased from commercial sources and used as received.
Nitrilotriacetic acid (N(CH2COOH)3, 22.937 g, 0.120 mol, 99%, Alfa Aesar A11936) was added to 300 mL of de-ionized (DI) water at 85°C in a 2000 mL beaker, followed by addition of basic magnesium carbonate ((MgCO3)4Mg(OH)2, 11.657 g, 0.120 mol Mg; 99%, <0.02% Fe, Strem 93-1220), to give a 1:1 molar ratio of nitrilotriacetate (NTA3-) to Mg2+. The solution became clear yellow within 1 minute. Different amounts of potassium carbonate (K2CO3, Alfa Aesar) were added (0 to 6 g), resulting in the formation of a solution of an alkaline earth metal salt of a N-containing organic acid and a alkali metal salt of a N-containing organic acid. The pH was measured after cooling to room temperature.

To precipitate the solid reproducibly, 1500 mL ethanol were flowed continuously over 5-6 minutes from a burette, with stirring and without heating. This produced off-white goo, with different degrees of graininess (more with higher pH values). After addition of ethanol, the solution was chilled in an ice bath for 1-2 hours, and the precipitate was collected and vacuum dried at 40 °C for 48 hours. The precipitate was ground by mortar and pestle to a fine white powder. Two salts were recrystallized from different solution compositions, and their structure and composition was determined by single crystal X-ray diffraction to determine the content of [MgNH(CH2COO)3(H2O)3]·CH3CH2OH and [KMgN(CH2COO)3(H2O)2]·H2O. The ratio between these compounds is the H:K(MgNTA) ratio mentioned in Table 1 below.

The materials described above were subjected to a heat and acid treatment as described below. Of each material, 20-25 g was transferred into a quartz boat, and loaded into a quartz tube. The tube was loaded into a tube furnace inside a fume hood, and heated to 900°C at 10 °C/min, held at 900°C for 1 hr, and let cool naturally. Argon gas (99.999%) was flowed through the tube at a flow rate of 100 sccm for 90 mins before heating started, and continuously during pyrolysis.

The carbons were removed from the tube and added directly into 500 mL of 0.5 citric acid. Direct addition to the acid prevents the formation of potassium-containing products on the tubes, which may heat up and ignite the carbon upon exposure to ambient atmosphere.
Each carbon was stirred in the acid for over 10 hours, and then vacuum filtered, washed with 5 L of deionised water, and dried for several hours at 120°C. Then each carbon was loaded again into a tube furnace and heated to 1000 °C at 5°C/min, held for 1 hr, and let cool naturally. The reaction heating reaction again took place under argon, as described above.
The total yield of each process is 5-15% (lower with higher KMgNTA fraction). All carbons were black and fine.

The properties of the materials thus obtained are presented in Table 1 below.

**Table 1:**

| Ex | K₂CO₃ added during preparation (wt. %) | pH | at % N | %N-pyr of total N | % N-graph of total N | % N-oxy of total N | BET2 SSA (m²/g) | total PV ml/g | PV (d< 2 nm) ml/g | PV (d > 2 nm) ml/g | %PV (d> 2 nm) |
|---|---|---|---|---|---|---|---|---|---|---|---|
| 1 | 0 | 3.7 | 5.7 | 33.4 | 51.4 | 15.2 | 1831 | 3.1 | 0.60 | 2.5 | 81 |
| 2 | 2 | 5.0 | 3.7 | 31.1 | 55.8 | 13.1 | 1809 | 2.5 | 0.66 | 1.8 | 72 |
| 3 | 4 | 5.7 | 1.3 | 20.8 | 71.7 | 7.56 | 1508 | 1.3 | 0.60 | 0.7 | 54 |
| 4 | 6 | 6.1 | 1.3 | 16.5 | 70.0 | 13.6 | 1250 | 1.0 | 0.42 | 0.6 | 60 |
| 5 | 8 | 7.8 | 1.2 | 24.1 | 63.5 | 12.4 | 2080 | 1.4 | 0.69 | 0.7 | 50 |

### Example 2: use in supercapacitors

A number of the materials prepared in Example 1, were tested in a supercapacitor. Electrodes were prepared as follows:
A slurry was prepared from the nitrogen-doped carbon by adding PTFE binder (0.05 wt% relative to carbon) in an ethanol:water (1:4) solution, and sonicated for several hours. It was dropcast on 5 mm diameter glassy carbon disk (loading 0.15 mg/cm²). It was tested in a 3-electrode setup in 0.5 M H₂SO₄, across 1 V potential window, between -0.35 and 0.65 V vs. saturated calomel electrode. The method was analogous to that described in M.D. Stoller and R.S. Ruoff, Best practice methods for determining an electrode materal's performance for ultracapacitors, Energy Environ., Sci., 2010, 3, 1294-1301.

The results are presented in Table 2 below. Values were obtained from cyclic galvanostatic charge-discharge curves, at 500 and 1000 mA/g discharge currents, which shows that the supercapacitor can withstand high charge-discharge rates.

**Table 2**

| **Sample name** | at% N | Specific capacitance (F/g) @ 500 mA/g | Aerial capacitance (µF/cm2) | Specific capacitance (F/g) @ 1000 mA/g |
|---|---|---|---|---|
| 1 | 5,7 | 224 | 12 | 211 |
| 2 | 3,7 | 191 | 11 | 166 |
| 3 | 1,3 | 114 | 8 | 109 |
| 4 | 1,3 | 145 | 12 | 109 |

From the above table it can be seen that the materials as described herein show good properties when used in a supercapacitor.

## Claims

1. Use of a nitrogen-doped porous carbon material in a supercapacitor, wherein the nitrogen-doped porous carbon material has the following properties:
- a nitrogen content in the range of 0.50 to 8.0 at% as determined via XPS
- a specific surface area (N2 , BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

2. Use according to claim 1, wherein the nitrogen-doped porous carbon material has a nitrogen content in the range of 1.0-8.0 at.%, in particular in the range of 2.0-8.0 at.%, more in particular in the range of 4.0 to 8.0 at%.

3. Use according to any one of the preceding claims, wherein the nitrogen-doped porous carbon material comprises pyridinic nitrogen in an amount of 10-50%, calculated on the total amount of atomic nitrogen, preferably at least 15%, more preferably at least 20%, in particular at least 25%.

4. Use according to any one of the preceding claims, wherein the nitrogen-doped porous carbon material has a specific surface area of at least 1100 m2/g, in particular at least 1200 m2/g, and/or at most 3000 m2/g.

5. Use according to any one of the preceding claims, wherein the nitrogen-doped porous carbon material has a nitrogen adsorption pore volume of at least 0.90 ml/g, in some embodiments at least 1.0 ml/g and/or at most 3.5 ml/g.

6. Use according to any one of the preceding claims, wherein the nitrogen-doped porous carbon material has at most 90% of its nitrogen adsorption pore volume in pores with a diameter of above 2 nm, in particular between 60 and 80%.

7. Use according to any one of the preceding claims, wherein the nitrogen-doped porous carbon material has at least 0.5 ml/g of its nitrogen adsorption pore volume in pores with a diameter of above 2 nm, in particularly at least 0.6 ml/g, more in particular at least 0.8 ml/g, still more in particular at least 1.0 ml/g.

8. Supercapacitor comprising at least two electrodes separated by a separator and connected via a liquid electrolyte, wherein at least one of the electrodes comprises a nitrogen-doped porous carbon material having the following properties:
- a nitrogen content in the range of 0.50 to 8.0 at% as determined via XPS
- a specific surface area (N2 adsorption, BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

9. Electrode for use in a supercapacitor which comprises a nitrogen-doped porous carbon material having the following properties:
- a nitrogen content in the range of 0.50 to 8.0 at% as determined via XPS
- a specific surface area (N2 adsorption, BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

10. Nitrogen-doped porous carbon materials which have the following properties:
- a nitrogen content in the range of 0.50 to 5.5 at% as determined via XPS
- a specific surface area (N2 adsorption, BET) of at least 1000 m2/g
- a total pore volume as determined by N2 adsorption of at least 0.80 ml/g,
- a N2 adsorption pore size distribution which is such that at least 50% of the pore volume is in pores with a diameter of above 2 nm.

11. Method for manufacturing the nitrogen-doped porous carbon material according to claim 10, the method comprising the steps of:
- preparing an aqueous solution comprising N-containing organic acid as anion, alkaline earth metal cations, and alkali metal cations,
- precipitating a mixture of alkaline earth metal salt of a N-containing organic acid and alkali metal salt of a N-containing organic acid from the aqueous solution,
- subjecting the precipitate to a pyrolysis step at a temperature between 500°C and 1200°C in an inert atmosphere,
- contacting the product of the pyrolysis step with an acidic solution to leach earth alkali metal components and alkaline metal components from the product of the pyrolysis step,
- optionally subjecting the leached product to a further heating step at a temperature of at least 800°C in an inert atmosphere.

12. Method according to claim 11, wherein alkaline earth metal salt of a N-containing organic acid is a magnesium salt.

13. Method according to claim 11 or 12, wherein the alkali metal salt of a N-containing organic acid is a sodium salt or a potassium salt, in particular a potassium salt.

14. Method according to any one of the preceding claims 11-13, wherein the aqueous solution of an alkaline earth metal salt of a N-containing organic acid and a alkali metal salt of a N-containing organic acid is prepared by combining in an aqueous medium an N-containing organic acid, an inorganic alkaline earth metal salt or oxide, and an inorganic alkali metal salt or oxide.

15. Method according to any one of the preceding claims 11-14, wherein the N-containing organic acid comprises at least one nitrogen atom and 2-20 carbon atoms, wherein the nitrogen is at a secondoary or teriary position, and wherein the acid is e.g., selected from nitrilo-triacetic acid, iminodiacetic acid, and ethylenediamine tetraactetic acid.
